# EUROPÄISCHE PATENTSCHRIFT

(11) **EP 4 615 733 B1**
(45) Veröffentlichungstag und Bekanntmachung des Hinweises auf die Patenterteilung: **08.04.2026**
(21) Anmeldenummer: 24820367.1
(22) Anmeldetag: 04.12.2024
(51) Int. Cl.: B60W 30/14, B60W 40/08, B60W 50/14

(54) **STEUERVORRICHTUNG UND VERFAHREN ZUM STEUERN EINES BETRIEBS EINES KRAFTFAHRZEUGS**
CONTROL DEVICE AND METHOD FOR CONTROLLING THE OPERATION OF A MOTOR VEHICLE
DISPOSITIF ET PROCÉDÉ DE COMMANDE PERMETTANT DE COMMANDER LE FONCTIONNEMENT D'UN VÉHICULE AUTOMOBILE

(30) Priorität: 29.01.2024 DE 102024102368
(43) Veröffentlichungstag der Anmeldung: 17.09.2025
(73) Patentinhaber: Bayerische Motoren Werke Aktiengesellschaft, 80809 München (DE)
(72) Erfinder: FORSTER, Yannick, 80333 München (DE); NAUJOKS, Frederik, 81371 München (DE)
(86) Internationale Anmeldenummer: PCT/EP2024/084640
(87) Internationale Veröffentlichungsnummer: WO 2025/162628

(56) Entgegenhaltungen:
- CN-A- 116 409 315
- DE-A1- 102012 211 967
- DE-A1- 102021 118 054
- DE-A1- 102021 200 898
- US-A1- 2022 135 079

## Beschreibung

Die vorliegende Offenbarung betrifft eine Steuervorrichtung zum Steuern eines Betriebs eines Kraftfahrzeugs, ein Kraftfahrzeug mit der Steuervorrichtung und/oder ein Verfahren zum Steuern eines Betriebs eines Kraftfahrzeugs. Zusätzlich, oder alternativ, wird ein Computerprogramm bereitgestellt, das Befehle umfasst, die bei der Ausführung des Programms durch einen Computer diesen dazu veranlassen, das Verfahren zumindest teilweise auszuführen. Zusätzlich, oder alternativ, wird ein computerlesbares Medium bereitgestellt, das Befehle umfasst, die bei der Ausführung der Befehle durch einen Computer diesen dazu veranlassen, das Verfahren zumindest teilweise auszuführen.

In modernen Kraftfahrzeugen, insbesondere Automobilen, werden vermehrt Fahrerassistenzsysteme verbaut.

Fahrerassistenzsysteme (FAS; engl. (Advanced) Driver Assistance Systems, (A)DAS) sind elektronische, insbesondere mechatronische, Einrichtungen in Kraftfahrzeugen zur Unterstützung des Fahrers in bestimmten Fahrsituationen. Hierbei stehen oft Sicherheitsaspekte, aber auch die Steigerung des Fahrkomforts im Vordergrund.

Dabei existieren Fahrerassistenzsysteme, welche ausgestaltet sind, um eine Längsführung und/oder eine Querführung eines Kraftfahrzeugs automatisiert zu steuern.

Beispielsweise kann eine automatische Geschwindigkeitsregelung die Längsführung des Kraftfahrzeugs in der Weise automatisiert ausführen, dass eine vorgebbare Sollgeschwindigkeit automatisch eingeregelt wird. Dies kann z.B. im Rahmen einer automatisierten Fahrfunktion mit oder ohne zusätzlicher Abstandsregelungsfunktion geschehen. Beispielsweise kann im Rahmen eine angepasste Geschwindigkeitsregelung (Adaptive Cruise Control - ACC) eine kombinierte Abstands-Geschwindigkeitsregelung ausgeführt werden. Alternativ kann eine Geschwindigkeitsregelungsfunktion ohne Abstandsregelung ausgeführt werden, die häufig als Tempomat (bei BMW Fahrzeugen als Dynamic Cruise Control - DCC) bezeichnet wird.

Eine automatische Geschwindigkeitsregelung (z.B. ACC oder DCC) kann beispielsweise eine Funktion zur automatischen Anpassung einer Geschwindigkeit des Kraftfahrzeugs an sich verändernde Geschwindigkeitsbegrenzungen aufweisen. Beispielsweise kann eine automatische Geschwindigkeitsregelung eine Geschwindigkeit des Kraftfahrzeugs auf 100 km/h begrenzen, wenn die zulässige Höchstgeschwindigkeit 100 km/h beträgt. Wenn keine Geschwindigkeitsbegrenzung mehr vorliegt, kann die automatische Geschwindigkeitsregelung das Kraftfahrzeug automatisiert beschleunigen, bis das Kraftfahrzeug eine voreingestellte Sollgeschwindigkeit erreicht hat, beispielsweise 130 km/h.

Ferner kann die automatische Geschwindigkeitsregelung einen Ausgleichswert für die Geschwindigkeit des Kraftfahrzeugs mit in die Geschwindigkeitsregelung einbeziehen. Wenn der Ausgleichswert für die Geschwindigkeit beispielsweise auf 7 km/h eingestellt ist, kann die automatische Geschwindigkeitsregelung das Kraftfahrzeug auf 137 km/h beschleunigen, wenn keine Geschwindigkeitsbegrenzung vorliegt und die voreingestellte Sollgeschwindigkeit 130 km/h beträgt.

Fahrerassistenzsysteme können auch Informationen über einen Zustand des Fahrers, beispielsweise einen Aufmerksamkeitszustand des Fahrers, zur automatisierten Steuerung des Kraftfahrzeugs miteinbeziehen.

Aus dem Stand der Technik sind Fahrerassistenzsysteme, die einen Aufmerksamkeitszustand eines Fahrers zur automatisierten Steuerung des Kraftfahrzeugs miteinbeziehen, bekannt. In der US 2023/0192097 A1 ist eine Fahrzeugsteuerungsvorrichtung beschrieben, die eine Beschleunigungsunterdrückungssteuerung durchführt, um eine Beschleunigung eines Fahrzeugs zu unterdrücken, wenn ein abgelenkter Zustand, der basierend auf dem Bild eines Fahrersitzes erkannt wurde, für eine vorbestimmte erste Zeit andauert. Der abgelenkte Zustand ist ein Zustand, in dem die Aufmerksamkeit des Fahrers für das Fahren beeinträchtigt ist. Die Fahrzeugsteuerungsvorrichtung führt eine Verzögerungssteuerung durch, um das Fahrzeug abzubremsen und anzuhalten, wenn der abgelenkte Zustand für eine vorbestimmte zweite Zeit andauert, die länger ist als die erste Zeit. US 2022135079 A1 beschreibt ein Reisesteuerungs-System, das Fahreraktionen anhand von Bilddaten erkennt, prüft, ob autonomes Fahren zulässig ist, und bei Unsicherheit den Fahrer um eine Entscheidung bittet. Der Fahrer signalisiert seine Absicht durch die Blickrichtung auf markierte Objekte; daraufhin startet das System autonomes bzw. langsames Fahren, wobei die Sicherheit durch HUD-Hinweise und Geschwindigkeitsbegrenzungen gewährleistet wird.

Solche bekannten Fahrerassistenzsysteme beschreiben jedoch keine Definition eines Aufmerksamkeitszustandes des Fahrers. Ferner beschreiben solche Fahrerassistenzsysteme nur einen Abbremsvorgang, der das Kraftfahrzeug im Falle eines abgelenkten Zustandes des Fahrers abbremst. Dadurch kann ein verminderter Fahrkomfort aber auch ein gesteigertes Risiko für ein ungewolltes Abbremsen entstehen.

Vor dem Hintergrund dieses Standes der Technik besteht die Aufgabe der vorliegenden Offenbarung darin, eine Vorrichtung und/oder ein Verfahren anzugeben, die jeweils geeignet sind, den Stand der Technik zu bereichern.

Gelöst wird die Aufgabe durch die Merkmale der unabhängigen Ansprüche. Die nebengeordneten Ansprüche und die Unteransprüche haben jeweils optionale Weiterbildungen der Offenbarung zum Inhalt.

Danach wird die Aufgabe durch eine Steuervorrichtung zum Steuern eines Betriebs eines Kraftfahrzeugs gelöst. Die Steuervorrichtung ist ausgestaltet, um Sensordaten betreffend einen Fahrer des Kraftfahrzeugs zu empfangen, ein Blickverhalten des Fahrers basierend auf den Sensordaten zu ermitteln und einen Ablenkungsgrad des Fahrers basierend auf dem ermittelten Blickverhalten zu ermitteln. Die Steuervorrichtung ist ausgestaltet, um einen Ausgleichswert und/oder einen Ausgleichsgrenzwert einer automatischen Geschwindigkeitsregelung und/oder eines Geschwindigkeitsbegrenzers des Kraftfahrzeugs in Abhängigkeit des ermittelten Ablenkungsgrades einzustellen.

Die Steuervorrichtung kann Teil des Fahrassistenzsystems sein oder dieses darstellen. Bei der Steuervorrichtung kann es sich beispielsweise um eine elektronische Steuereinheit (engl. ECU = electronic control unit) handeln. Die elektronische Steuereinheit kann eine intelligente prozessorgesteuerte Einheit sein, die z. B. über ein Central Gateway (CGW) mit anderen Modulen kommunizieren kann und die ggf. über Feldbusse, wie den CAN-Bus, LIN-Bus, MOST-Bus, FlexRay und/oder über das Automotive-Ethernet, z. B. zusammen mit Telematiksteuergeräten und/oder einer Umfeldsensorik, das Fahrzeugbordnetz bilden kann.

Denkbar ist, dass die Steuervorrichtung für das Fahrverhalten des Kraftfahrzeugs relevante Funktionen, wie die Lenkung, die Motorsteuerung, die Kraftübertragung, und/oder das Bremssystem, steuert. Außerdem können Fahrerassistenzsysteme, wie beispielsweise ein Parkassistent, eine angepasste Geschwindigkeitsregelung (ACC, engl. Adaptive Cruise Control), ein Geschwindigkeitsbegrenzer, ein Spurhalteassistent, ein Spurwechselassistent, eine Verkehrszeichenerkennung, eine Lichtsignalerkennung, ein Anfahrassistent, ein Nachtsichtassistent und/oder ein Kreuzungsassistent, von der Steuervorrichtung gesteuert werden.

Die Steuervorrichtung kann ausgestaltet sein, um anhand der Sensordaten den Ablenkungsgrad des Fahrers zu ermitteln. Die Sensordaten können einen Zustand des Fahrers repräsentieren.

Der Zustand des Fahrers kann einen Aufmerksamkeitszustand umfassen. In dem Aufmerksamkeitszustand kann der Fahrer in Fahrtrichtung des Kraftfahrzeugs und/oder durch bzw. auf eine Windschutzscheibe des Kraftfahrzeugs blicken.

Der Zustand des Fahrers kann einen Ablenkungszustand umfassen. In dem Ablenkungszustand kann der Fahrer in eine von der Fahrtrichtung abweichende Richtung blicken. Beispielsweise kann der Fahrer in dem Ablenkungszustand in einen Rückspiegel blicken und/oder in Richtung eines Infotainment Systems des Kraftfahrzeugs. Beispielsweise kann der Fahrer in dem Ablenkungszustand nicht durch bzw. auf die Windschutzscheibe blicken.

Die Sensordaten können eine Zeitdauer des Ablenkungszustandes des Fahrers umfassen. Die Sensordaten können Zeitdauern von mehr als einem Ablenkungszustand des Fahrers umfassen.

Die Sensordaten können eine Anzahl von Ablenkungszuständen des Fahrers umfassen, beispielsweise eine Anzahl von Ablenkungszuständen des Fahrers innerhalb eines zuvor bestimmten Zeitintervalls.

Die Steuervorrichtung kann ausgestaltet sein, das Blickverhalten des Fahrers basierend auf den Sensordaten zu ermitteln, wobei das Blickverhalten des Fahrers eine Zeitdauer eines Ablenkungszustandes des Fahrers und/oder Zeitdauern von mehr als einem Ablenkungszustand des Fahrers und/oder die Anzahl von Ablenkungszuständen des Fahrers innerhalb des zuvor bestimmten Zeitintervalls umfassen kann.

Die Steuervorrichtung kann mit einer Detektionseinheit zur Detektion des Zustandes des Fahrers datenverbunden sein. Die Detektionseinheit kann ausgestaltet sein, um die Sensordaten zu erfassen. Beispielsweise kann die Detektionseinheit ausgestaltet sein, um den Zustand des Fahrers basierend auf den Sensordaten zu detektieren und optional in den Sensordaten zu hinterlegen. Beispielsweise kann die Detektionseinheit die detektierten Zeitdauern der Ablenkungszustände des Fahrers und die detektierte Anzahl der Ablenkungszustände des Fahrers bestimmen bzw. ermitteln. Beispielsweise kann die Steuervorrichtung mit der Detektionseinheit kommunizieren und die Sensordaten von dieser empfangen. Denkbar ist, dass die Steuervorrichtung die Sensordaten durch ein von der Detektionseinheit ausgehendes Signal empfängt. Die Detektionseinheit kann zumindest teilweise Teil der Steuervorrichtung sein, d..h ein von der Steuervorrichtung externer Teil kann der Detektionseinheit kann ausgestaltet sein, um die Sensordaten zu erfassen, und ein weiterer Teil der Detektionseinheit, welcher auch Teil der Steuervorrichtung ist, kann ausgestaltet sein, um den Ablenkungsgrad basierend auf den Sensordaten zu bestimmen.

Die Steuervorrichtung kann mit der Detektionseinheit, optional mit dem von der Steuervorrichtung externer Teil davon, mittels eines Kabels datenverbunden sein.

Die Detektionseinheit kann eine Fahrzeuginnenraumkamera sein oder eine solche aufweisen. Die Fahrzeuginnenraumkamera kann ausgestaltet sein, um Sensordaten betreffend den Fahrer zu erfassen und optional den Zustand des Fahrers, optional den Ablenkungsgrad, zu ermitteln. Beispielsweise kann die Fahrzeuginnenraumkamera ausgestaltet sein, um zu detektieren, ob der Fahrer in Fahrtrichtung blickt oder nicht. Mit anderen Worten kann die Fahrzeuginnenraumkamera ausgestaltet sein, einen Ablenkungszustand und/oder einen Aufmerksamkeitszustand des Fahrers zu detektieren.

Die Fahrzeuginnenraumkamera kann Bestandteil eines Fahrerüberwachungssystems sein (DMS, engl. Driver Monitoring System) oder dieses darstellen.

Die Steuervorrichtung kann ausgestaltet sein, einen Betrieb der automatischen Geschwindigkeitsregelung zu steuern.

Die automatische Geschwindigkeitsregelung kann (z.B. im Rahmen von ACC, DCC oder Limiter) eine Geschwindigkeit des Kraftfahrzeugs automatisch an sich verändernde Geschwindigkeitsbegrenzungen anpassen. Beispielsweise kann die automatische Geschwindigkeitsregelung im Rahmen von ACC oder DCC eine Geschwindigkeit des Kraftfahrzeugs auf eine zulässige Höchstgeschwindigkeit, beispielsweise unabhängig von einer voreingestellten Sollgeschwindigkeit des Kraftfahrzeugs, begrenzen. Wenn keine Geschwindigkeitsbegrenzung mehr vorliegt, kann die automatische Geschwindigkeitsregelung das Kraftfahrzeug wieder automatisiert beschleunigen, bis das Kraftfahrzeug die voreingestellte Sollgeschwindigkeit erreicht hat. Beispielsweise kann die voreingestellte Sollgeschwindigkeit des Kraftfahrzeugs 130 km/h betragen. Die automatische Geschwindigkeitsregelung kann die Geschwindigkeit des Kraftfahrzeugs auf eine vorliegende zulässige Höchstgeschwindigkeit, beispielsweise 100 km/h, begrenzen. Wenn keine Geschwindigkeitsbegrenzung mehr vorliegt, kann die automatische Geschwindigkeitsregelung das Kraftfahrzeug wieder automatisiert beschleunigen, bis die voreingestellte Sollgeschwindigkeit von 130 km/h erreicht ist.

Die automatische Geschwindigkeitsregelung kann Teil einer umfassenderen automatisierten Fahrfunktion sein, welche nicht nur die Längsführung, sondern z.B. zugleich auch eine Querführung automatisiert ausführt.

Alternativ oder zusätzlich zu dem Einstellen eines Ausgleichswerts und/oder eines Ausgleichsgrenzwerts einer automatischen Geschwindigkeitsregelung in Abhängigkeit des ermittelten Ablenkungsgrades kann vorgesehen sein, dass ein (u.U. anderer) Ausgleichswert und/oder ein (u.U. anderer) Ausgleichsgrenzwert eines Geschwindigkeitsbegrenzers in Abhängigkeit des ermittelten Ablenkungsgrades eingestellt wird.

Ein Geschwindigkeitsbegrenzer (häufig auch als Limiter bezeichnet) begrenzt eine Fahrzeuggeschwindigkeit selbsttätig auf einen vorgebbaren Maximalgeschwindigkeitswert, auch wenn durch eine Fahrpedalbetätigung ansonsten (d.h. bei inaktivem Limiter) eine höhere Geschwindigkeit angefordert würde. Ein derartiges Geschwindigkeitsbegrenzungssystem mit sogenannter "Limiter"-Funktion ist beispielsweise bei BMW Fahrzeugen unter der Bezeichnung "SLD" (Speed Limit Device) bekannt.

Analog zu dem oben mit Bezug auf die automatische Geschwindigkeitsregelung Beschriebenen kann auch der Maximalgeschwindigkeitswert eines Geschwindigkeitsbegrenzers automatisch (z.B. kartenbasiert und/oder aufgrund einer kamerabasierten Verkehrszeichenerkennung) auf eine vorliegende zulässige Höchstgeschwindigkeit gesetzt werden. Auch hierbei kann ein einstellbarer Ausgleichswert und gemäß einigen Ausführungsformen ein Ausgleichsgrenzwert, welcher die Einstellbarkeit des Ausgleichswerts begrenzt, vorgesehen sein.

Die Steuervorrichtung kann mit einer Erfassungseinrichtung des Kraftfahrzeugs zum Erfassen einer zulässigen Höchstgeschwindigkeit datenverbunden sein. Beispielsweise kann die Steuervorrichtung mit der Erfassungseinrichtung kommunizieren und die zulässige Höchstgeschwindigkeit empfangen.

Die Steuervorrichtung kann ausgestaltet sein, die zulässige Höchstgeschwindigkeit beim Steuern des Betriebs der automatischen Geschwindigkeitsregelung und/oder des Geschwindigkeitsbegrenzers zu verwenden.

Denkbar ist, dass die Steuervorrichtung die zulässige Höchstgeschwindigkeit durch ein von der Erfassungseinrichtung ausgehendes Signal empfängt. Die Erfassungseinrichtung kann eine Außenkamera aufweisen oder als eine Außenkamera ausgebildet sein. Mittels der Außenkamera kann eine optische Verkehrszeichenerkennung zum Erkennen der zulässigen Höchstgeschwindigkeit realisiert werden. Alternativ oder zusätzlich kann die zulässige Höchstgeschwindigkeit auf der Grundlage einer digitalen Karte in Abhängigkeit von einer aktuellen Fahrzeugposition, die z.B. mittels eines globalen Satellitennavigationssystems ermittelt werden kann, bereitgestellt werden.

Die automatische Geschwindigkeitsregelung kann einen Ausgleichswert mit in die Geschwindigkeitsregelung des Kraftfahrzeugs einbeziehen. Beispielsweise kann die automatische Geschwindigkeitsregelung die voreingestellte Sollgeschwindigkeit des Kraftfahrzeugs um den Ausgleichswert erhöhen. Die automatische Geschwindigkeitsregelung kann die Geschwindigkeit des Kraftfahrzeugs derart einstellen, dass die zulässige Höchstgeschwindigkeit um den Ausgleichswert überschritten wird. Wenn beispielsweise der Ausgleichswert auf 7 km/h eingestellt ist, kann die automatische Geschwindigkeitsregelung das Kraftfahrzeug auf 137 km/h beschleunigen, wenn keine Geschwindigkeitsbegrenzung vorliegt und die voreingestellte Sollgeschwindigkeit 130 km/h beträgt.

Allgemein kann der Ausgleichswert als ein - insbesondere positiver - Offset auf eine Sollgeschwindigkeit einer automatischen Geschwindigkeitsregelung verstanden werden, die in Abwesenheit des Ausgleichswerts durch eine Funktion zur Anpassung an Geschwindigkeitsbegrenzungen automatisch eingestellt würde.

Alternativ oder zusätzlich kann der Ausgleichswert ein - insbesondere positiver - Offset auf einen Maximalgeschwindigkeitswert eines Geschwindigkeitsbegrenzers sein, der in Abwesenheit des Ausgleichswerts durch eine Funktion zur Anpassung an Geschwindigkeitsbegrenzungen automatisch eingestellt würde.

Beispielsweise kann der Offset auf eine konkrete, anhand eines erkannten Verkehrszeichens erfasste zulässige Höchstgeschwindigkeit addiert werden, um eine für die automatische Geschwindigkeitsregelung zu verwendende angepasste Sollgeschwindigkeit bzw. einen für den Geschwindigkeitsbegrenzer zu verwendenden angepassten Maximalgeschwindigkeitswert zu erhalten. Es ist dabei auch möglich, dass die Funktion zur Anpassung an Geschwindigkeitsbegrenzungen in Abwesenheit von erkannten ausdrücklichen Geschwindigkeitsbegrenzungen eine voreingestellte Sollgeschwindigkeit, wie z.B. auf einer deutschen Autobahn 130 km/h, annimmt, und dass der Ausgleichswert in einem solchen Fall auf diese voreingestellte Sollgeschwindigkeit addiert wird.

Der Ausgleichswert kann ein Geschwindigkeitswert sein. Der Ausgleichswert kann einstellbar sein. Beispielsweise kann der Ausgleichswert von dem Fahrer vor, nach und/oder während einer Fahrt eingestellt werden.

Der Ausgleichsgrenzwert kann ein Geschwindigkeitsgrenzwert sein. Beispielsweise kann der Ausgleichsgrenzwert die obere Grenze des Ausgleichswertes sein. Denkbar ist, dass der Ausgleichswert den Ausgleichsgrenzwert nicht überschreiten kann. Mit anderen Worten ist denkbar, dass der Ausgleichswert nur bis zu dem Ausgleichsgrenzwert einstellbar ist. Wenn beispielsweise der Ausgleichsgrenzwert 5 km/h beträgt, dann kann der Ausgleichswert nur bis zu einem Wert von 5 km/h einstellbar sein.

Der Ausgleichsgrenzwert kann einstellbar sein, beispielsweise von der Steuervorrichtung. Der Ausgleichsgrenzwert kann auf einen zuvor bestimmten Wert einstellbar sein, beispielsweise auf einen Wert von größer oder gleich 3 km/h oder größer oder gleich 5 km/h oder größer oder gleich 7 km/h oder größer oder gleich 10 km/h oder größer oder gleich 12 km/h.

Es kann vorgesehen sein, dass der Ausgleichsgrenzwert von dem Fahrer nicht einstellbar bzw. nicht veränderbar ist.

Die Steuervorrichtung kann ausgestaltet sein, um den Ausgleichsgrenzwert in Abhängigkeit des Ablenkungsgrades einzustellen, sodass der Ausgleichsgrenzwert ausgehend von einem aktuellen Ausgleichsgrenzwert reduziert wird, und/oder erhöht wird, und/oder auf einen zuvor bestimmten Wert eingestellt wird.

Die Steuervorrichtung kann ausgestaltet sein, um den Ausgleichswert in Abhängigkeit des Ausgleichsgrenzwertes einzustellen, sodass der Ausgleichswert kleiner oder gleich dem Ausgleichsgrenzwert ist.

Wenn beispielsweise der Ausgleichsgrenzwert ausgehend von einem aktuellen Ausgleichsgrenzwert von 7 km/h von der Steuervorrichtung auf einen Wert von 5 km/h reduziert wird, der von dem Fahrer eingestellte Ausgleichswert aber 7 km/h beträgt, dann wird der Ausgleichswert auf einen Wert von 5 km/h von der Steuervorrichtung begrenzt.

Im Einklang mit dem Vorstehenden kann also durch eine Änderung des Ausgleichsgrenzwert automatisch auch eine Änderung des Ausgleichswerts bewirkt werden. Wenn beispielsweise während einer Fahrt mit einem Ausgleichswert, der einem gegenwärtig geltenden Ausgleichsgrenzwert entspricht, der Fahrer als akut abgelenkt erkannt wird, kann der Ausgleichsgrenzwert und somit auch der Ausgleichswert verringert werden.

Alternativ oder zusätzlich kann vorgesehen sein, dass der Ausgleichsgrenzwert aufgrund eines erkannten Ablenkungsverhaltens des Fahrers während eines längeren Zeitabschnitts während einer Fahrt oder sogar während mehrerer Fahrten erkannt und entsprechend (z.B. als Teil eines Fahrerprofils) gespeichert wird. Beispielsweise kann vorgesehen sein, dass ein Fahrer, der sich während einer Anzahl von Fahrten wiederholt unaufmerksam gezeigt hat, durch einen verringerten Ausgleichgrenzwert bei einer anschließenden Fahrt (oder im weiteren Verlauf einer der Fahrten) nur mehr geringere Ausgleichswerte einstellen kann und/oder dass ein oder mehrere bereits eingestellte Ausgleichswerte sich automatisch auf den Ausgleichsgrenzwert verringern.

Die oben beschriebene Vorrichtung bietet dabei eine Reihe von Vorteilen. Unter anderem kann der Ausgleichsgrenzwert dynamisch an den Zustand des Fahrers angepasst werden. Beispielsweise kann bei einem hohem Ablenkungsgrad des Fahrers der zulässige Ausgleichsgrenzwert reduziert werden.

Weiterhin beispielsweise kann bei einem niedrigen Ablenkungsgrad des Fahrers, der zulässige Ausgleichsgrenzwert erhöht werden. Dies kann sich positiv auf den Fahrkomfort und den Verkehrsfluss auswirken.

Die Steuervorrichtung kann eine Ermittlungseinheit zum Ermitteln des Ablenkungsgrades des Fahrers aufweisen. Beispielsweise kann/können die Steuervorrichtung und/oder die Ermittlungseinheit den Ablenkungsgrad des Fahrers aus den Sensordaten ermitteln. Beispielsweise kann/können die Steuervorrichtung und/oder die Ermittlungseinheit mit der Detektionseinheit kommunizieren und die Sensordaten empfangen, das Blickverhalten des Fahrers basierend auf den Sensordaten ermitteln und anschließend den Ablenkungsgrad des Fahrers basierend auf dem ermittelten Blickverhalten ermitteln. Denkbar ist, dass die Steuervorrichtung und/oder die Ermittlungseinheit die Sensordaten durch ein von der Detektionseinheit ausgehendes Signal empfängt.

Die Steuervorrichtung kann eine Speichereinheit zum Speichern eines oder mehrerer Grenzwerte des Ablenkungsgrades aufweisen. Der Grenzwert oder die Grenzwerte kann/können bei der Herstellung des Kraftfahrzeugs in die Speichereinheit geschrieben werden.

Die Steuervorrichtung kann eine Ausleseeinheit zum Auslesen des Grenzwertes des Ablenkungsgrades oder der Grenzwerte des Ablenkungsgrades aufweisen. Beispielsweise kann/können die Steuervorrichtung und/oder die Ausleseeinheit ausgestaltet sein, um den Grenzwert des Ablenkungsgrades oder die Grenzwerte des Ablenkungsgrades aus der Speichereinheit auszulesen.

Die Steuervorrichtung kann eine Vergleichseinheit zum Vergleichen des Ablenkungsgrades des Fahrers mit dem Grenzwert des Ablenkungsgrades und/oder mit den Grenzwerten des Ablenkungsgrades aufweisen.

Die Steuervorrichtung und/oder die Vergleichseinheit kann/können ausgestaltet sein, um den Grenzwert des Ablenkungsgrades oder die Grenzwerte des Ablenkungsgrades mit dem Ablenkungsgrad des Fahrers, beispielsweise mit dem durch die Steuervorrichtung und/oder durch die Ermittlungseinheit ermittelten Ablenkungsgrad des Fahrers, zu vergleichen. Die Steuervorrichtung und/oder die Vergleichseinheit kann/können ausgestaltet sein, um ein Vergleichsergebnis aus dem Vergleich zu speichern, beispielsweise in der Speichereinheit der Steuervorrichtung.

Die Steuervorrichtung kann ausgestaltet sein, um in Abhängigkeit des Vergleichsergebnisses den Ausgleichswert und/oder den Ausgleichsgrenzwert einzustellen.

Nachfolgend werden mögliche Weiterbildungen der oben beschriebenen Vorrichtung im Detail erläutert.

Die Steuervorrichtung kann ausgestaltet sein, um den Ablenkungsgrad des Fahrers in Abhängigkeit von einem Kurzzeitwert zu ermitteln, wobei der Kurzzeitwert eine Zeitdauersumme von Kurzzeitablenkungszuständen innerhalb eines zuvor bestimmten ersten Zeitintervalls angibt, deren jeweilige Zeitdauer kleiner als ein zuvor bestimmter Kurzzeitablenkungsgrenzwert ist.

Eine derart ausgestaltete Steuervorrichtung bietet den Vorteil, dass zur Bestimmung des Ablenkungsgrades auch kurzzeitige Unaufmerksamkeiten des Fahrers mit einbezogen werden, sodass die Steuervorrichtung den Ablenkungsgrad verbessert bestimmen kann.

Der Kurzzeitablenkungszustand des Fahrers kann ein Ablenkungszustand des Fahrers sein.

Der Kurzzeitablenkungsgrenzwert kann einen Wert von kleiner oder gleich 3 Sekunden, oder kleiner oder gleich 2 Sekunden, oder kleiner oder gleich 1 Sekunde, oder kleiner oder gleich 0,5 Sekunden, oder kleiner oder gleich 0,1 Sekunden aufweisen.

Der Kurzzeitablenkungsgrenzwert kann in der Speichereinheit hinterlegt sein. Der Kurzzeitablenkungsgrenzwert kann bei der Herstellung des Kraftahrzeugs in die Speichereinheit geschrieben werden. Der Kurzzeitablenkungsgrenzwert kann unveränderlich sein. Beispielsweise kann ein Fahrer den Kurzzeitablenkungsgrenzwert nicht verändern.

Die Zeitdauersumme kann die Summe der Zeitdauern der Kurzzeitablenkungszustände des Fahrers, beispielsweise während des ersten Zeitintervalls, umfassen.

Das erste Zeitintervall kann 30 Sekunden betragen. Das erste Zeitintervall kann kleiner oder gleich 60 Sekunden, oder kleiner oder gleich 45 Sekunden, oder kleiner oder gleich 25 Sekunden, oder kleiner oder gleich 20 Sekunden, oder kleiner oder gleich 15 Sekunden betragen.

Die Steuervorrichtung und/oder die Ermittlungseinheit kann/können ausgestaltet sein, um den Kurzzeitwert zu ermitteln, beispielsweise basierend auf den Sensordaten.

Wenn beispielsweise das erste Zeitintervall 30 Sekunden beträgt und die Detektionseinheit innerhalb dieses ersten Zeitintervalls zwei Kurzzeitablenkungszustände des Fahrers von jeweils 2 Sekunden und drei Kurzzeitablenkungszustände des Fahrers von jeweils 0,5 Sekunden detektiert hat, beträgt der von der Steuervorrichtung und/oder der Ermittlungseinheit ermittelte Kurzzeitwert 5,5 Sekunden.

Die Steuervorrichtung kann ausgestaltet sein, um ein akustisches und/oder visuelles Warnsignal an den Fahrer auszugeben, beispielsweise mittels eines Lautsprechers und/oder mittels eines Fahrzeugdisplays, wenn der Kurzzeitwert einen ersten Kurzzeitgrenzwert überschreitet.

Der erste Kurzzeitgrenzwert ist ein zuvor bestimmter Wert des Kurzzeitwertes. Der erste Kurzzeitgrenzwert kann einen Wert von größer oder gleich 5 Sekunden, oder größer oder gleich 10 Sekunden oder größer oder gleich 15 Sekunden aufweisen.

Die Steuervorrichtung kann ausgestaltet sein, um den Ablenkungsgrad des Fahrers in Abhängigkeit von einem Langzeitwert zu ermitteln, wobei der Langzeitwert eine Zeitdauer eines Langzeitablenkungszustandes des Fahrers angibt, dessen Zeitdauer größer als ein zuvor bestimmter Langzeitablenkungsgrenzwert ist.

Der Langzeitablenkungszustand des Fahrers kann ein Ablenkungszustand des Fahrers sein.

Der Langzeitablenkungsgrenzwert kann einen Wert von größer oder gleich 3 Sekunden, oder größer oder gleich 4 Sekunden, oder größer oder gleich 5 Sekunden aufweisen.

Der Langzeitablenkungsgrenzwert kann in der Speichereinheit hinterlegt sein. Der Langzeitablenkungsgrenzwert kann bei der Herstellung des Kraftahrzeugs in die Speichereinheit geschrieben werden. Der Langzeitablenkungsgrenzwert kann unveränderlich sein. Beispielsweise kann vorgesehen sein, dass ein Fahrer den Langzeitablenkungsgrenzwert nicht verändern kann.

Die Steuervorrichtung und/oder die Ermittlungseinheit kann/können ausgestaltet sein, um den Langzeitwert zu ermitteln, beispielsweise basierend auf den Sensordaten.

Wenn beispielsweise die Detektionseinheit einen Langzeitablenkungszustand des Fahrers von 4 Sekunden detektiert hat, beträgt der von der Steuervorrichtung und/oder der Ermittlungseinheit ermittelte Langzeitwert 4 Sekunden.

Die Steuervorrichtung kann ausgestaltet sein, um den Ablenkungsgrad des Fahrers in Abhängigkeit von einem Langzeitmaximalwert zu ermitteln, wobei der Langzeitmaximalwert die Zeitdauer des Langzeitablenkungszustandes des Fahrers mit der höchsten Zeitdauer innerhalb eines zuvor bestimmten dritten Zeitintervalls angibt, wobei die Zeitdauer des Langzeitmaximalwertes größer als der zuvor bestimmte Langzeitablenkungsgrenzwert ist.

Das dritte Zeitintervall kann 60 Minuten betragen. Das dritte Zeitintervall kann kleiner 60 Minuten, oder kleiner oder gleich 45 Minuten, oder kleiner oder gleich 30 Minuten, oder kleiner oder gleich 15 Minuten, oder kleiner oder gleich 5 Minuten betragen.

Das dritte Zeitintervall kann gleich dem ersten Zeitintervall sein.

Wenn beispielsweise die Detektionseinheit einen Langzeitablenkungszustand des Fahrers von 4 Sekunden und einen Langzeitablenkungszustand von 6 Sekunden innerhalb des dritten Zeitintervalls detektiert hat, beträgt der von der Steuervorrichtung und/oder der Ermittlungseinheit ermittelte Langzeitmaximalwert 6 Sekunden.

Die Steuervorrichtung kann ausgestaltet sein, um ein akustisches und/oder visuelles Warnsignal an den Fahrer auszugeben, beispielsweise mittels eines Lautsprechers und/oder mittels eine Fahrzeugdisplays, wenn der Langzeitwert und/oder der Langzeitmaximalwert einen ersten Langzeitgrenzwert überschreitet/überschreiten.

Der erste Langzeitgrenzwert ist ein zuvor bestimmter Wert des Langzeitwertes und/oder des Langzeitmaximalwertes. Der erste Langzeitgrenzwert kann einen Wert von größer oder gleich 3 Sekunden, oder größer oder gleich 4 Sekunden oder größer oder gleich 5 Sekunden aufweisen.

Die Steuervorrichtung kann ausgestaltet sein, um den Ablenkungsgrad des Fahrers in Abhängigkeit einer Ablenkungshäufigkeit zu ermitteln, wobei die Ablenkungshäufigkeit eine Anzahl von Kurzzeitwerten und/oder Langzeitwerten innerhalb eines zuvor bestimmten zweiten Zeitintervalls angibt.

Mit anderen Worten kann die Ablenkungshäufigkeit die Anzahl von ermittelten Kurzzeitwerten und/oder Langzeitwerten innerhalb des zweiten Zeitintervalls angeben.

Eine derart ausgestaltete Steuervorrichtung bietet den Vorteil, dass zur Bestimmung des Ablenkungsgrades neben den Ablenkungszeitdauern auch die Auftretenshäufigkeit von Unaufmerksamkeiten des Fahrers mit einbezogen werden, sodass die Steuervorrichtung den Ablenkungsgrad nochmals verbessert bestimmen kann.

Die Ablenkungshäufigkeit kann die Anzahl von Kurzzeitwerten innerhalb des zweiten Zeitintervalls umfassen, wobei nur die Kurzzeitwerte größer oder gleich des ersten Kurzzeitgrenzwertes umfasst sind.

Die Ablenkungshäufigkeit kann die Anzahl von Langzeitwerten innerhalb des zweiten Zeitintervalls umfassen, wobei nur die Langzeitwerte größer oder gleich des ersten Langzeitgrenzwertes umfasst sind.

Das zweite Zeitintervall kann 60 Minuten betragen. Das zweite Zeitintervall kann kleiner 60 Minuten, oder kleiner oder gleich 45 Minuten, oder kleiner oder gleich 30 Minuten, oder kleiner oder gleich 15 Minuten, oder kleiner oder gleich 5 Minuten betragen.

Das zweite Zeitintervall kann gleich dem ersten Zeitintervall und/oder dem dritten Zeitintervall sein.

Die Steuervorrichtung und/oder die Ermittlungseinheit kann/können ausgestaltet sein, um die Ablenkungshäufigkeit zu ermitteln, beispielsweise basierend auf den Sensordaten.

Wenn beispielsweise das zweite Zeitintervall 60 Minuten beträgt und die Steuervorrichtung und/oder die Ermittlungseinheit innerhalb dieses zweiten Zeitintervalls zwei Kurzzeitwerte oberhalb des ersten Kurzzeitgrenzwertes und drei Langzeitwerte oberhalb des ersten Langzeitgrenzwertes ermittelt hat/haben, weist die von der Steuervorrichtung und/oder der Ermittlungseinheit ermittelte Ablenkungshäufigkeit einen Wert von 5 auf.

Die Steuervorrichtung kann ausgestaltet sein, um ein akustisches und/oder visuelles Warnsignal an den Fahrer auszugeben, beispielsweise mittels eines Lautsprechers und/oder mittels eines Fahrzeugdisplays, wenn die Ablenkungshäufigkeit einen ersten Häufigkeitsgrenzwert überschreitet.

Der erste Häufigkeitsgrenzwert ist ein zuvor bestimmter Wert der Ablenkungshäufigkeit. Der erste Häufigkeitsgrenzwert kann einen Wert von größer oder gleich 4, oder größer oder gleich 6 oder größer oder gleich 8 aufweisen.

Der Ablenkungsgrad des Fahrers kann ein einzelner Wert sein. Der Ablenkungsgrad des Fahrers kann ein Wertepaar und/oder ein Wertetripel sein. Der Ablenkungsgrad des Fahrers kann ein Vektor mit einer Dimension von zwei oder mehr, oder drei oder mehr sein.

Der Ablenkungsgrad des Fahrers kann den Kurzzeitwert und/oder den Langzeitwert und/oder die Ablenkungshäufigkeit umfassen.

Die Steuervorrichtung kann ausgestaltet sein, um den Ausgleichsgrenzwert in Abhängigkeit des ermittelten Ablenkungsgrades so einzustellen, dass der Ausgleichswert und/oder der Ausgleichsgrenzwert ausgehend von einem aktuellen Ausgleichs(grenz)wert reduziert wird, wenn der Ablenkungsgrad einen zuvor bestimmten ersten (zweiten) Obergrenzwert überschreitet, oder den Ausgleichswert und/oder den Ausgleichsgrenzwert in Abhängigkeit des ermittelten Ablenkungsgrades so einzustellen, dass der Ausgleichs(grenz)wert auf einen zuvor bestimmten ersten Wert eingestellt wird, wenn der Ablenkungsgrad den zuvor bestimmten ersten (zweiten) Obergrenzwert überschreitet.

Die Begriffe eines ersten und zweiten Obergrenzwerts werden hier lediglich eingeführt, um zwei u.U. von voneinander verschiedene Obergrenzwerte (einen für den Ausgleichswert und einen weiteren für den Ausgleichsgrenzwert) zu bezeichnen. Der erste und zweite Obergrenzwert können auch identisch gewählt sein. Ferner müssen nicht beide Grenzwerte vorgesehen sein. Beispielsweise muss bei einer Ausführungsform, welche ohne einen Ausgleichsgrenzwert auskommt und bei welcher sich die Anpassung in Abhängigkeit des ermittelten Ablenkungsgrades direkt auf den Ausgleichswert bezieht, gar kein zweiter Obergrenzwert definiert sein.

Der jeweilige (erste und/oder zweite) Obergrenzwert kann in der Speichereinheit hinterlegt sein. Der Obergrenzwert kann bei der Herstellung des Kraftahrzeugs in die Speichereinheit geschrieben werden. Der Obergrenzwert kann unveränderlich sein. Beispielsweise kann vorgesehen sein, dass ein Fahrer den Obergrenzwert nicht verändern kann.

Der jeweilige (erste und/oder zweite) Obergrenzwert kann ein einzelner Wert sein. Der Obergrenzwert kann ein Wertepaar und/oder ein Wertetripel sein. Der Obergrenzwert kann ein Vektor mit einer Dimension von zwei oder mehr oder drei oder mehr sein.

Der jeweilige (erste und/oder zweite) Obergrenzwert kann den ersten Kurzzeitgrenzwert und/oder den ersten Langzeitgrenzwert und/oder den ersten Häufigkeitsgrenzwert umfassen.

Beispielsweise kann der Ausgleichsgrenzwert ausgehend von einem aktuellen Ausgleichsgrenzwert von 12 km/h auf 10 km/h und/oder auf 7 km/h und/oder auf 5 km/h und/oder auf 2 km/h und/oder auf 0 km/h reduziert werden, wenn der Ablenkungsgrad den zuvor bestimmten zweiten Obergrenzwert überschreitet.

Beispielsweise kann der Ausgleichsgrenzwert ausgehend von einem aktuellen Ausgleichsgrenzwert von 0 km/h auf den zuvor bestimmten ersten Wert eingestellt werden, wenn der Ablenkungsgrad den zuvor bestimmten zweiten Obergrenzwert überschreitet.

Der erste Wert kann in der Speichereinheit hinterlegt sein. Der erste Wert des Ausgleichsgrenzwertes kann bei der Herstellung des Kraftahrzeugs in die Speichereinheit geschrieben werden. Der erste Wert kann unveränderlich sein. Beispielsweise kann vorgesehen sein, dass ein Fahrer den ersten Wert des Ausgleichsgrenzwertes nicht verändern kann. Der erste Wert kann 0 km/h betragen.

Die Steuervorrichtung kann ausgestaltet sein, um den Ausgleichsgrenzwert in Abhängigkeit des Ablenkungsgrades so einzustellen, dass der Ausgleichsgrenzwert reduziert wird, wenn der Ablenkungsgrad den ersten Kurzzeitgrenzwert und/oder den ersten Langzeitgrenzwert und/oder den ersten Häufigkeitsgrenzwert überschreitet, oder den Ausgleichsgrenzwert in Abhängigkeit des Ablenkungsgrades so einzustellen, dass der Ausgleichsgrenzwert auf den zuvor bestimmten ersten Wert eingestellt wird, wenn der Ablenkungsgrad den ersten Kurzzeitgrenzwert und/oder den ersten Langzeitgrenzwert und/oder den ersten Häufigkeitsgrenzwert überschreitet.

Die Steuervorrichtung kann ausgestaltet sein, um den Ausgleichsgrenzwert in Abhängigkeit des ermittelten Ablenkungsgrades so einzustellen, dass der Ausgleichsgrenzwert ausgehend von einem aktuellen Ausgleichsgrenzwert erhöht wird, wenn der Ablenkungsgrad einen zuvor bestimmten Untergrenzwert unterschreitet, oder den Ausgleichsgrenzwert in Abhängigkeit des ermittelten Ablenkungsgrades so einzustellen, dass der Ausgleichsgrenzwert auf einen zuvor bestimmten zweiten Wert eingestellt wird, wenn der Ablenkungsgrad den zuvor bestimmten Untergrenzwert unterschreitet.

Eine derart ausgestaltete Steuervorrichtung bietet den Vorteil, dass durch die Erhöhung des Ausgleichsgrenzwertes der Fahrkomfort gesteigert werden kann. Gleichzeitig kann sich die Erhöhung des Ausgleichsgrenzwertes positiv auf den Verkehrsfluss auswirken.

Der Untergrenzwert kann in der Speichereinheit hinterlegt sein. Der Untergrenzwert kann bei der Herstellung des Kraftahrzeugs in die Speichereinheit geschrieben werden. Der Untergrenzwert kann unveränderlich sein. Beispielsweise kann ein Fahrer den Untergrenzwert nicht verändern.

Der Untergrenzwert kann ein einzelner Wert sein. Der Untergrenzwert kann ein Wertepaar und/oder ein Wertetripel sein. Der Untergrenzwert kann ein Vektor mit einer Dimension von zwei oder mehr oder drei oder mehr sein.

Der Untergrenzwert kann einen zweiten Kurzzeitgrenzwert und/oder einen zweiten Langzeitgrenzwert und/oder einen zweiten Häufigkeitsgrenzwert umfassen.

Der zweite Kurzzeitgrenzwert ist ein zuvor bestimmter Wert des Kurzzeitwertes. Der zweite Kurzzeitgrenzwert kann einen Wert von kleiner oder gleich 10 Sekunden, oder kleiner oder gleich 8 Sekunden oder kleiner oder gleich 5 Sekunden aufweisen.

Der zweite Langzeitgrenzwert ist ein zuvor bestimmter Wert des Langzeitwertes. Der zweite Langzeitgrenzwert kann einen Wert von kleiner oder gleich 3 Sekunden, oder kleiner oder gleich 2 Sekunden oder kleiner oder gleich 1 Sekunde aufweisen.

Der zweite Häufigkeitsgrenzwert ist ein zuvor bestimmter Wert der Ablenkungshäufigkeit. Der zweite Häufigkeitsgrenzwert kann einen Wert von kleiner oder gleich 6, oder kleiner oder gleich 4 oder kleiner oder gleich 2 aufweisen.

Der erste Kurzzeitgrenzwert kann gleich dem zweiten Kurzzeitgrenzwert sein. Der erste Langzeitgrenzwert kann gleich dem zweiten Langzeitgrenzwert sein. Der erste Häufigkeitsgrenzwert kann gleich dem zweiten Häufigkeitsgrenzwert sein. Der Obergrenzwert kann gleich dem Untergrenzwert sein.

Beispielsweise kann der Ausgleichsgrenzwert ausgehend von einem aktuellen Ausgleichsgrenzwert von 0 km/h auf 2 km/h und/oder auf 5 km/h und/oder auf 7 km/h und/oder auf 10 km/h und/oder auf 12 km/h erhöht werden, wenn der Ablenkungsgrad den zuvor bestimmten Untergrenzwert unterschreitet.

Beispielsweise kann der Ausgleichsgrenzwert ausgehend von einem aktuellen Ausgleichsgrenzwert von 7 km/h auf den zuvor bestimmten zweiten Wert eingestellt werden, wenn der Ablenkungsgrad den zuvor bestimmten Untergrenzwert unterschreitet.

Der zweite Wert kann in der Speichereinheit hinterlegt sein. Der zweite Wert kann bei der Herstellung des Kraftahrzeugs in die Speichereinheit geschrieben werden. Der zweite Wert kann unveränderlich sein. Beispielsweise kann ein Fahrer den zweiten Wert nicht verändern. Der zweite Wert kann 7 km/h betragen.

Die Steuervorrichtung kann ausgestaltet sein, um den Ausgleichsgrenzwert in Abhängigkeit des Ablenkungsgrades so einzustellen, dass der Ausgleichsgrenzwert erhöht wird, wenn der Ablenkungsgrad den zweiten Kurzzeitgrenzwert und/oder den zweiten Langzeitgrenzwert und/oder den zweiten Häufigkeitsgrenzwert unterschreitet. Die Steuervorrichtung kann ausgestaltet sein, um den Ausgleichsgrenzwert in Abhängigkeit des Ablenkungsgrades so einzustellen, dass der Ausgleichsgrenzwert auf den zuvor bestimmten zweiten Wert eingestellt wird, wenn der Ablenkungsgrad den zweiten Kurzzeitgrenzwert und/oder den zweiten Langzeitgrenzwert und/oder den zweiten Häufigkeitsgrenzwert unterschreitet.

Das oben Beschriebene lässt sich mit anderen Worten und auf eine mögliche konkretere Ausgestaltung wie nachfolgend beschrieben zusammenfassen, wobei die nachfolgende Beschreibung nicht einschränkend auszulegen ist.

Der Ausgleichsgrenzwert kann auch als Offset bezeichnet werden.

Denkbar ist, dass für die Ablenkungsdetektion des Fahrers eine Innenraumkamera und ein Algorithmus verwendet werden kann. Neue Fahrzeuge können in der Zukunft mit Fahrerüberwachungssystemen (DMS, engl. Driver Monitoring System) ausgestattet sein. Diese DMS können per Innenraumkamera das Blickverhalten detektieren und die Aufmerksamkeit bzw. Ablenkungsgrad des Fahrers berechnen. Sind diese vom Fahrgeschehen abgelenkt (beispielsweise durch eine Nebenaufgabe am Infotainment System (IVIS)), so kann eine visuell-akustische Warnung mit Hinweis auf das Fahrgeschehen angezeigt werden. Der Verbraucherschutz (EuroNCAP) hat bereits einen konkreten Algorithmus für das Auslösen dieser Warnungen vorgeschlagen. Demnach kann der Algorithmus nach einer 3 Sekunden anhaltenden Ablenkung sowie kumulierten 10 Sekunden Ablenkung innerhalb der letzten 30 Sekunden auslösen. Letztere Ablenkung wird auch als visual attention time sharing (VATS) bezeichnet. Weiterhin hat der Verbraucherschutz definiert, welche Elemente als Ablenkung zählen. Dies können neben im Fahrzeug verbauten Displays auch die Rückspiegel sein, sodass alle Blicke, die nicht durch die Windschutzscheibe gerichtet sind als Ablenkung zu zählen sein können.

Ist also die VATS-Summe aktuell hoch, beispielsweise 8 Sekunden, und gab es vergleichsweise viele visuell-akustische Warnungen innerhalb einer bestimmten vergangenen Zeiteinheit, beispielsweise fünf Warnungen in der letzten Stunde, so kann nur noch ein Offset von 2 km/h zugelassen werden, während bei konstant niedriger VATS-Summe, beispielsweise im Mittel nicht über 4 Sekunden, und wenigen visuell-akustischen Warnungen in der vergangenen Zeiteinheit, beispielsweise nur eine Warnung in der letzten Stunde, der gesamte mögliche Offset zugelassen werden kann.

Ferner wird ein Kraftfahrzeug mit der oben beschriebenen Steuereinheit bzw. Steuervorrichtung bereitgestellt.

Bei dem Kraftfahrzeug kann es sich um einen Personenkraftwagen, insbesondere ein Automobil, oder ein Nutzfahrzeug, wie z. B. einen Lastkraftwagen, handeln.

Das Kraftfahrzeug kann automatisiert sein. Das Kraftfahrzeug kann ausgestaltet sein, um mittels der Steuervorrichtung eine Längsführung und/oder eine Querführung bei einem automatisierten Fahren des Kraftfahrzeugs zumindest teilweise und/oder zumindest zeitweise zu übernehmen.

Das automatisierte Fahren kann so erfolgen, dass die Fortbewegung des Kraftfahrzeugs (weitgehend) autonom erfolgt. Das automatisierte Fahren kann zumindest teilweise und/oder zeitweise durch die Steuervorrichtung gesteuert werden.

Denkbar ist, dass das Kraftfahrzeug durch ein Fahrassistenzsystem aktiv, z. B. durch eine Anpassung einer Ist-Lenkradposition, und optional passiv, z. B. durch eine Anzeige eines Abbiegehinweises, in die Querführung des Kraftfahrzeugs eingreift.

Das Kraftfahrzeug kann ein Kraftfahrzeug der Autonomiestufe 1 sein, d. h. bestimmte Fahrerassistenzsysteme aufweisen, die den Fahrer bei der Fahrzeugbedienung unterstützen, wie beispielsweise der Abstandsregeltempomat (ACC).

Das Kraftfahrzeug kann ein Kraftfahrzeug der Autonomiestufe 2 sein, d. h. so teilautomatisiert sein, dass Funktionen wie automatisches Einparken, Spurhalten bzw. Querführung, allgemeine Längsführung, Beschleunigen und/oder Abbremsen von Fahrerassistenzsystemen übernommen werden.

Das Kraftfahrzeug kann ein Kraftfahrzeug der Autonomiestufe 3 sein, d. h. so bedingungsautomatisiert, dass der Fahrer das System Fahrzeug nicht durchgehend überwachen muss. Das Kraftfahrzeug führt selbstständig Funktionen wie das Auslösen des Blinkers, Spurwechsel und/oder Spurhalten durch. Der Fahrer kann sich anderen Beschäftigungen widmen, wird aber bei Bedarf innerhalb einer Vorwarnzeit vom System aufgefordert die Führung zu übernehmen.

Das Kraftfahrzeug kann ein Kraftfahrzeug der Autonomiestufe 4 sein, d. h. so hochautomatisiert sein, dass die Führung des Fahrzeugs dauerhaft vom System des Fahrzeugs übernommen wird. Werden die Fahraufgaben vom System nicht mehr bewältigt, kann der Fahrer aufgefordert werden, die Führung zu übernehmen.

Das Kraftfahrzeug kann ein Kraftfahrzeug der Autonomiestufe 5 sein, d. h. so vollautomatisiert, dass der Fahrer zum Erfüllen der Fahraufgabe nicht erforderlich ist. Außer zu dem Festlegen des Ziels und zu dem Starten des Systems ist kein menschliches Eingreifen erforderlich. Das Kraftfahrzeug kann ohne Lenkrad und Pedale auskommen.

Das oben mit Bezug zur Steuervorrichtung Beschriebene gilt analog auch für das Kraftfahrzeug und umgekehrt.

Ferner wird ein Verfahren zum Steuern eines Betriebs eines Kraftfahrzeugs bereitgestellt, wobei das Verfahren umfasst: Ermitteln von Sensordaten betreffend einen Fahrer des Kraftfahrzeugs, Ermitteln eines Blickverhaltens des Fahrers basierend auf den Sensordaten, und Ermitteln eines Ablenkungsgrades des Fahrers basierend auf dem ermittelten Blickverhalten. Das Verfahren umfasst ferner: Einstellen eines Ausgleichswerts und/oder eines Ausgleichsgrenzwert einer automatischen Geschwindigkeitsregelung und/oder eines Geschwindigkeitsbegrenzers des Kraftfahrzeugs in Abhängigkeit des ermittelten Ablenkungsgrades.

Bei dem Steuerverfahren kann es sich um ein computer-implementiertes Verfahren handeln, d. h. einer, mehrere oder alle Schritte des Verfahrens können zumindest teilweise von einem Computer bzw. einer Vorrichtung zur Datenverarbeitung, optional der Steuervorrichtung, ausgeführt werden.

Das oben mit Bezug zur Steuervorrichtung und zum Kraftfahrzeug Beschriebene gilt analog auch für das Verfahren und umgekehrt.

Das Verfahren kann ferner umfassen: Detektieren des Zustandes des Fahrers und/oder der Zustände des Fahrers.

Das Verfahren kann ferner umfassen: Hinterlegen des detektierten Zustandes des Fahrers und/oder der detektierten Zustände des Fahrers in den Sensordaten, beispielsweise hinterlegen der detektierten Zeitdauern der Ablenkungszustände des Fahrers und der detektierten Anzahl der Ablenkungszustände des Fahrers in den Sensordaten.

Das Verfahren kann ferner umfassen: Auslesen des Grenzwertes des Ablenkungsgrades oder der Grenzwerte des Ablenkungsgrades, beispielsweise aus der Speichereinheit.

Das Verfahren kann ferner umfassen: Vergleichen des Ablenkungsgrades des Fahrers mit dem Grenzwert des Ablenkungsgrades und/oder mit den Grenzwerten des Ablenkungsgrades.

Das Verfahren kann ferner umfassen: Speichern des Vergleichsergebnis aus dem Vergleich des Ablenkungsgrades des Fahrers mit dem Grenzwert des Ablenkungsgrades und/oder mit den Grenzwerten des Ablenkungsgrades, beispielsweise in der Speichereinheit der Steuervorrichtung.

Ferner wird ein Computerprogramm, umfassend Befehle, die bei der Ausführung des Programms durch einen Computer diesen veranlassen, das oben beschriebene Verfahren zumindest teilweise aus- bzw. durchzuführen, bereitgestellt.

Ein Programmcode des Computerprogramms kann in einem beliebigen Code vorliegen, insbesondere in einem Code, der für Steuerungen von Kraftfahrzeugen geeignet ist.

Das oben mit Bezug zur Steuervorrichtung, zum Kraftfahrzeug und zum Verfahren Beschriebene gilt analog auch für das Computerprogramm und umgekehrt.

Ferner wird ein computerlesbares Medium, insbesondere ein computerlesbares Speichermedium, bereitgestellt. Das computerlesbare Medium umfasst Befehle, die bei der Ausführung der Befehle durch einen Computer diesen dazu veranlassen, das oben beschriebene Verfahren zumindest teilweise aus- bzw. durchzuführen.

Das heißt, es kann ein computerlesbares Medium bereitgestellt werden, das ein oben definiertes Computerprogramm umfasst. Bei dem computerlesbaren Medium kann es sich um ein beliebiges digitales Datenspeichergerät handeln, wie zum Beispiel einen USB-Stick, eine Festplatte, eine CD-ROM, eine SD-Karte oder eine SSD-Karte (bzw. SSD-Laufwerk/SSD-Festplatte).

Das Computerprogramm muss nicht zwingend auf einem solchen computerlesbaren Speichermedium gespeichert sein, um dem Kraftfahrzeug zur Verfügung gestellt zu werden, sondern kann auch über das Internet oder anderweitig extern bezogen werden.

Das oben mit Bezug zum Verfahren, zur Steuervorrichtung, zum Computerprogramm und zum Kraftfahrzeug Beschriebene gilt analog auch für das computerlesbare Medium und umgekehrt.

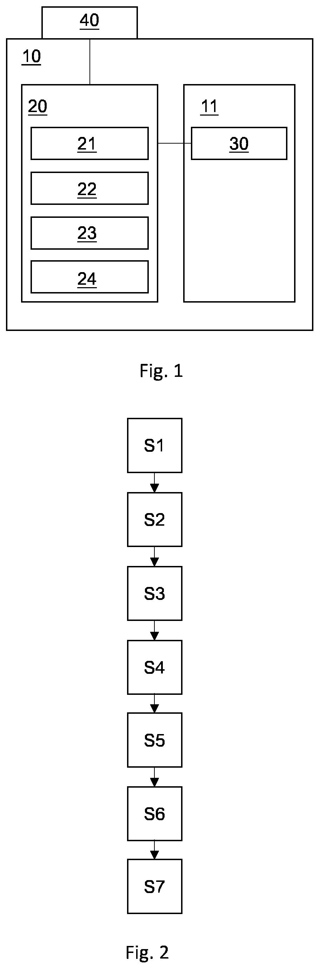

Nachfolgend wird eine optionale Ausführungsform mit Bezug zu Figuren 1 und 2 beschrieben.
- Fig. 1: zeigt schematisch ein Kraftfahrzeug mit einer Steuervorrichtung zum Steuern eines Betriebs eines Kraftfahrzeugs gemäß der optionalen Ausführungsform, und
- Fig. 2: zeigt schematisch ein Ablaufdiagramm eines Verfahrens zum Steuern eines Betriebs eines Kraftfahrzeugs gemäß der optionalen Ausführungsform.

Das in Figur 1 lediglich schematisch dargestellte Kraftfahrzeug 10 weist eine Steuervorrichtung 20, eine in einem Kraftfahrzeuginnenraum 11 des Kraftfahrzeugs 10 angeordnete Detektionseinheit 30 und eine an dem Kraftfahrzeug 10 angeordnete Erfassungseinrichtung 40 auf. Die Steuervorrichtung 20 ist mit der Detektionseinheit 30 und der Erfassungseinrichtung 40 datenverbunden.

Die Steuervorrichtung 20 weist eine Ermittlungseinheit 21 zum Ermitteln des Ablenkungsgrades des Fahrers, eine Speichereinheit 22 zum Speichern eines oder mehrerer Grenzwerte des Ablenkungsgrades, eine Ausleseeinheit 23 zum Auslesen des Grenzwertes des Ablenkungsgrades oder der Grenzwerte des Ablenkungsgrades und eine Vergleichseinheit 24 zum Vergleichen des Ablenkungsgrades des Fahrers mit dem Grenzwert des Ablenkungsgrades und/oder mit den Grenzwerten des Ablenkungsgrades, auf.

Die Steuervorrichtung 20 ist ausgestaltet, um das nachfolgend auch mit Bezug zu Figur 2 im Detail beschriebene Verfahren auszuführen.

Das in Figur 2 als Ablaufdiagramm dargestellte Verfahren umfasst sieben Verfahrensschritte. In einem ersten Verfahrensschritt S1 detektiert die in dem Kraftfahrzeuginnenraum 11 angeordnete Detektionseinheit 30 die Zustände des Fahrers des Kraftfahrzeugs 10 und hinterlegt die detektierten Zustände des Fahrers in den Sensordaten betreffend den Fahrer des Kraftfahrzeugs10.

In einem zweiten Verfahrensschritt S2 empfängt die Steuervorrichtung 20 die Sensordaten betreffend den Fahrer des Kraftfahrzeugs durch ein von der Detektionseinheit 30 ausgehendes Signal an die Ermittlungseinheit 21 der Steuervorrichtung 20.

In einem dritten Verfahrensschritt S3 ermittelt die Steuervorrichtung 20 mittels der Ermittlungseinheit 21 das Blickverhalten des Fahrers basierend auf den empfangenden Sensordaten.

In einem vierten Verfahrensschritt S4 ermittelt die Steuervorrichtung 20 mit der Ermittlungseinheit 21 den Ablenkungsgrad des Fahrers basierend auf dem ermittelten Blickverhalten des Fahrers. Der Ablenkungsgrad umfasst hierbei einen Kurzzeitwert, einen Langzeitwert und eine Ablenkungshäufigkeit. Die Ermittlungseinheit 21 ermittelt dazu den Kurzzeitwert aus der in den Sensordaten enthaltenen Zeitdauersumme von Kurzzeitablenkungszuständen des Fahrers innerhalb eines ersten Zeitintervalls. Ferner ermittelt die Ermittlungseinheit 21 den Langzeitwert aus den in den Sensordaten enthaltenen Langzeitablenkungszuständen innerhalb eines dritten Zeitintervalls. Schließlich ermittelt die Ermittlungseinheit 21 die Ablenkungshäufigkeit aus der in den Sensordaten enthaltenen Anzahl von Kurzzeitwerten und Langzeitwerten innerhalb eines zweiten Zeitintervalls, wobei nur Kurzzeitwerte größer oder gleich eines ersten Kurzzeitgrenzwertes und nur Langzeitwerte größer oder gleich eines ersten Langzeitgrenzwertes berücksichtigt werden.

In einem fünften Verfahrensschritt S5 liest die Steuervorrichtung 20 die in der Speichereinheit 22 gespeicherten Grenzwerte des Ablenkungsgrades mittels der Ausleseeinheit 23 aus. Im vorliegenden Fall sind ein Obergrenzwert und ein Untergrenzwert in der Speichereinheit 22 gespeichert. Der Obergrenzwert umfasst den ersten Kurzzeitgrenzwert, den ersten Langzeitgrenzwert und einen ersten Häufigkeitsgrenzwert. Der Untergrenzwert umfasst einen zweiten Kurzzeitgrenzwert, einen zweiten Langzeitgrenzwert und einen zweiten Häufigkeitsgrenzwert.

In einem sechsten Verfahrensschritt S6 vergleicht die Steuervorrichtung 20 mittels der Vergleichseinheit 24 den aus dem ermittelten Blickverhalten des Fahrers ermittelten Ablenkungsgrad des Fahrers mit dem Obergrenzwert des Ablenkungsgrades und mit dem Untergrenzwert des Ablenkungsgrades. Dazu vergleicht die Steuervorrichtung 20 mittels der Vergleichseinheit 24 den ermittelten Kurzzeitwert des Ablenkungsgrades mit dem ersten Kurzzeitgrenzwert, den ermittelten Langzeitwert des Ablenkungsgrades mit dem ersten Langzeitgrenzwert und die ermittelte Ablenkungshäufigkeit mit dem ersten Häufigkeitsgrenzwert. Dabei überschreitet der ermittelte Ablenkungsgrad den Obergrenzwert, wenn der Langzeitwert den ersten Langzeitgrenzwert oder der Kurzzeitwert den ersten Kurzzeitgrenzwert oder die Ablenkungshäufigkeit den ersten Häufigkeitsgrenzwert überschreitet. Ferner vergleicht die Steuervorrichtung 20 mittels der Vergleichseinheit 24 den ermittelten Kurzzeitwert des Ablenkungsgrades mit dem zweiten Kurzzeitgrenzwert, den ermittelten Langzeitwert des Ablenkungsgrades mit dem zweiten Langzeitgrenzwert und die ermittelte Ablenkungshäufigkeit mit dem zweiten Häufigkeitsgrenzwert. Dabei unterschreitet der ermittelte Ablenkungsgrad den Untergrenzwert, wenn der Langzeitwert den zweiten Langzeitgrenzwert, der Kurzzeitwert den zweiten Kurzzeitgrenzwert und die Ablenkungshäufigkeit den zweiten Häufigkeitsgrenzwert unterschreitet.

In einem siebten Verfahrensschritt S7 stellt die Steuervorrichtung den Ausgleichsgrenzwert in Abhängigkeit des ermittelten Ablenkungsgrades ein. Wenn der Ablenkungsgrad den Obergrenzwert überschreitet, dann stellt die Steuervorrichtung den Ausgleichgrenzwert ausgehend von einen aktuellen Ausgleichsgrenzwert so ein, dass der Ausgleichsgrenzwert reduziert wird oder auf einen zuvor bestimmten ersten Wert eingestellt wird. Wenn der Ablenkungsgrad den Untergrenzwert unterschreitet, dann stellt die Steuervorrichtung den Ausgleichsgrenzwert ausgehend von dem aktuellen Ausgleichsgrenzwert so ein, dass der Ausgleichsgrenzwert erhöht wird oder auf einen zuvor bestimmten zweiten Wert eingestellt wird.

### Bezugszeichenliste

- 10: Kraftfahrzeug
- 11: Kraftfahrzeuginnenraum
- 20: Steuervorrichtung
- 21: Ermittlungseinheit
- 22: Speichereinheit
- 23: Ausleseeinheit
- 24: Vergleichseinheit
- 30: Detektionseinheit
- 40: Erfassungseinrichtung

- S1 - S7: Verfahrensschritte des Verfahrens

## Patentansprüche

1. Steuervorrichtung (20) zum Steuern eines Betriebs eines Kraftfahrzeugs (10), wobei die Steuervorrichtung (20) ausgestaltet ist, um:
- Sensordaten betreffend einen Fahrer des Kraftfahrzeugs (10) zu empfangen,
- ein Blickverhalten des Fahrers basierend auf den Sensordaten zu ermitteln, und
- einen Ablenkungsgrad des Fahrers basierend auf dem ermittelten Blickverhalten zu ermitteln,
**dadurch gekennzeichnet, dass** die Steuervorrichtung (20) ausgestaltet ist, um:
- einen Ausgleichswert und/oder einen Ausgleichsgrenzwert einer automatischen Geschwindigkeitsregelung und/oder eines Geschwindigkeitsbegrenzers des Kraftfahrzeugs (10) in Abhängigkeit des ermittelten Ablenkungsgrades einzustellen.

2. Steuervorrichtung (20) nach Anspruch 1, **dadurch gekennzeichnet, dass** die Steuervorrichtung (20) ausgestaltet ist, um den Ablenkungsgrad des Fahrers in Abhängigkeit von einem Kurzzeitwert zu ermitteln, wobei der Kurzzeitwert eine Zeitdauersumme von Kurzzeitablenkungszuständen innerhalb eines zuvor bestimmten ersten Zeitintervalls angibt, deren jeweilige Zeitdauer kleiner als ein zuvor bestimmter Kurzzeitablenkungsgrenzwert ist.

3. Steuervorrichtung (20) nach Anspruch 1 oder Anspruch 2, **dadurch gekennzeichnet, dass** die Steuervorrichtung ausgestaltet ist, um den Ablenkungsgrad des Fahrers in Abhängigkeit von einem Langzeitwert zu ermitteln, wobei der Langzeitwert eine Zeitdauer eines Langzeitablenkungszustands des Fahrers angibt, dessen Zeitdauer größer als ein zuvor bestimmter Langzeitablenkungsgrenzwert ist.

4. Steuervorrichtung (20) nach Anspruch 2 oder 3, **dadurch gekennzeichnet, dass** die Steuervorrichtung (20) ausgestaltet ist, um den Ablenkungsgrad des Fahrers in Abhängigkeit von einer Ablenkungshäufigkeit zu ermitteln, wobei die Ablenkungshäufigkeit eine Anzahl von Kurzzeitwerten und/oder Langzeitwerten innerhalb eines zuvor bestimmten zweiten Zeitintervalls angibt.

5. Steuervorrichtung (20) nach einem der vorhergehenden Ansprüche, **dadurch gekennzeichnet, dass** die Steuervorrichtung (20) ausgestaltet ist, um:
- den Ausgleichswert in Abhängigkeit des ermittelten Ablenkungsgrades so einzustellen, dass der Ausgleichswert ausgehend von einem aktuellen Ausgleichswert reduziert wird, wenn der Ablenkungsgrad einen zuvor bestimmten ersten Obergrenzwert überschreitet, oder
- den Ausgleichswert in Abhängigkeit des ermittelten Ablenkungsgrades so einzustellen, dass der Ausgleichswert auf einen zuvor bestimmten ersten Wert eingestellt wird, wenn der Ablenkungsgrad den zuvor bestimmten ersten Obergrenzwert überschreitet.

6. Steuervorrichtung (20) nach einem der vorhergehenden Ansprüche, **dadurch gekennzeichnet, dass** die Steuervorrichtung (20) ausgestaltet ist, um:
- den Ausgleichswert in Abhängigkeit des ermittelten Ablenkungsgrades so einzustellen, dass der Ausgleichswert ausgehend von einem aktuellen Ausgleichswert erhöht wird, wenn der Ablenkungsgrad einen zuvor bestimmten ersten Untergrenzwert unterschreitet, oder
- den Ausgleichswert in Abhängigkeit des ermittelten Ablenkungsgrades so einzustellen, dass der Ausgleichswert auf einen zuvor bestimmten zweiten Wert eingestellt wird, wenn der Ablenkungsgrad den zuvor bestimmten ersten Untergrenzwert unterschreitet.

7. Steuervorrichtung (20) nach einem der vorhergehenden Ansprüche, **dadurch gekennzeichnet, dass** die Steuervorrichtung (20) ausgestaltet ist, um:
- den Ausgleichsgrenzwert in Abhängigkeit des ermittelten Ablenkungsgrades so einzustellen, dass der Ausgleichsgrenzwert ausgehend von einem aktuellen Ausgleichsgrenzwert reduziert wird, wenn der Ablenkungsgrad einen zuvor bestimmten zweiten Obergrenzwert überschreitet, oder
- den Ausgleichsgrenzwert in Abhängigkeit des ermittelten Ablenkungsgrades so einzustellen, dass der Ausgleichsgrenzwert auf einen zuvor bestimmten ersten Wert eingestellt wird, wenn der Ablenkungsgrad den zuvor bestimmten zweiten Obergrenzwert überschreitet.

8. Steuervorrichtung (20) nach einem der vorhergehenden Ansprüche, **dadurch gekennzeichnet, dass** die Steuervorrichtung (20) ausgestaltet ist, um:
- den Ausgleichsgrenzwert in Abhängigkeit des ermittelten Ablenkungsgrades so einzustellen, dass der Ausgleichsgrenzwert ausgehend von einem aktuellen Ausgleichsgrenzwert erhöht wird, wenn der Ablenkungsgrad einen zuvor bestimmten zweiten Untergrenzwert unterschreitet, oder
- den Ausgleichsgrenzwert in Abhängigkeit des ermittelten Ablenkungsgrades so einzustellen, dass der Ausgleichsgrenzwert auf einen zuvor bestimmten zweiten Wert eingestellt wird, wenn der Ablenkungsgrad den zuvor bestimmten zweiten Untergrenzwert unterschreitet.

9. Kraftfahrzeug (10), **dadurch gekennzeichnet, dass** das Kraftfahrzeug (10) die Steuervorrichtung (20) nach einem der Ansprüche 1 bis 8 umfasst.

10. Verfahren zum Steuern eines Betriebs eines Kraftfahrzeugs (10), wobei das Verfahren umfasst:
- Empfangen (S2) von Sensordaten betreffend einen Fahrer des Kraftfahrzeugs (10),
- Ermitteln (S3) eines Blickverhaltens des Fahrers basierend auf den Sensordaten, und
- Ermitteln (S4) eines Ablenkungsgrads des Fahrers basierend auf dem ermittelten Blickverhalten,
**dadurch gekennzeichnet, dass** das Verfahren umfasst:
- Einstellen (S7) eines Ausgleichswert und/oder eines Ausgleichsgrenzwerts einer automatischen Geschwindigkeitsregelung und/oder eines Geschwindigkeitsbegrenzers des Kraftfahrzeugs (10) in Abhängigkeit des ermittelten Ablenkungsgrades.

11. Computerprogramm, **dadurch gekennzeichnet, dass** das Computerprogramm Befehle umfasst, die bei der Ausführung des Programms durch einen Computer diesen veranlassen, das Verfahren nach Anspruch 10 auszuführen.

12. Computerlesbares Medium, **dadurch gekennzeichnet, dass** das computerlesbare Medium Befehle umfasst, die bei der Ausführung der Befehle durch einen Computer diesen veranlassen, das Verfahren nach Anspruch 10 auszuführen.

## Claims

1. Control device (20) for controlling an operation of a motor vehicle (10), wherein the control device (20) is configured to:
• receive sensor data concerning a driver of the motor vehicle (10),
• determine a gaze behavior of the driver based on the sensor data, and
• determine a distraction degree of the driver based on the determined gaze behavior,
**characterized in that** the control device (20) is configured to:
• set a compensation value and/or a compensation limit value of an automatic speed control and/or of a speed limiter of the motor vehicle (10) in dependence on the determined distraction degree.

2. Control device (20) according to claim 1, **characterized in that** the control device (20) is configured to determine the distraction degree of the driver in dependence on a short-term value, wherein the short-term value indicates a time duration sum of short-term distraction states within a previously determined first time interval, whose respective time duration is smaller than a previously determined short-term distraction limit value.

3. Control device (20) according to claim 1 or claim 2, **characterized in that** the control device is configured to determine the distraction degree of the driver in dependence on a long-term value, wherein the long-term value indicates a time duration of a long-term distraction state of the driver, whose time duration is greater than a previously determined long-term distraction limit value.

4. Control device (20) according to claim 2 or 3, **characterized in that** the control device (20) is configured to determine the distraction degree of the driver in dependence on a distraction frequency, wherein the distraction frequency indicates a number of short-term values and/or long-term values within a previously determined second time interval.

5. Control device (20) according to one of the preceding claims, **characterized in that** the control device (20) is configured to:
• set the compensation value in dependence on the determined distraction degree such that the compensation value is reduced starting from a current compensation value, when the distraction degree exceeds a previously determined first upper limit value, or
• set the compensation value in dependence on the determined distraction degree such that the compensation value is set to a previously determined first value, when the distraction degree exceeds the previously determined first upper limit value.

6. Control device (20) according to one of the preceding claims, **characterized in that** the control device (20) is configured to:
• set the compensation value in dependence on the determined distraction degree such that the compensation value is increased starting from a current compensation value, when the distraction degree falls below a previously determined first lower limit value, or
• set the compensation value in dependence on the determined distraction degree such that the compensation value is set to a previously determined second value, when the distraction degree falls below the previously determined first lower limit value.

7. Control device (20) according to one of the preceding claims, **characterized in that** the control device (20) is configured to:
• set the compensation limit value in dependence on the determined distraction degree such that the compensation limit value is reduced starting from a current compensation limit value, when the distraction degree exceeds a previously determined second upper limit value, or
• set the compensation limit value in dependence on the determined distraction degree such that the compensation limit value is set to a previously determined first value, when the distraction degree exceeds the previously determined second upper limit value.

8. Control device (20) according to one of the preceding claims, **characterized in that** the control device (20) is configured to:
• set the compensation limit value in dependence on the determined distraction degree such that the compensation limit value is increased starting from a current compensation limit value, when the distraction degree falls below a previously determined second lower limit value, or
• set the compensation limit value in dependence on the determined distraction degree such that the compensation limit value is set to a previously determined second value, when the distraction degree falls below the previously determined second lower limit value.

9. Motor vehicle (10), **characterized in that** the motor vehicle (10) comprises the control device (20) according to one of claims 1 to 8.

10. Method for controlling an operation of a motor vehicle (10), wherein the method comprises:
• receiving (S2) sensor data concerning a driver of the motor vehicle (10),
• determining (S3) a gaze behavior of the driver based on the sensor data, and
• determining (S4) a distraction degree of the driver based on the determined gaze behavior,
**characterized in that** the method comprises:
• setting (S7) a compensation value and/or a compensation limit value of an automatic speed control and/or of a speed limiter of the motor vehicle (10) in dependence on the determined distraction degree.

11. Computer program, **characterized in that** the computer program comprises instructions which, when the program is executed by a computer, cause the computer to execute the method according to claim 10.

12. Computer-readable medium, **characterized in that** the computer-readable medium comprises instructions which, when the instructions are executed by a computer, cause the computer to execute the method according to claim 10.

## Revendications

1. Dispositif de commande (20) pour commander un fonctionnement d'un véhicule automobile (10), le dispositif de commande (20) étant conçu pour :
• recevoir des données de capteur concernant un conducteur du véhicule automobile (10),
• déterminer un comportement de regard du conducteur sur la base des données de capteur, et
• déterminer un degré de distraction du conducteur sur la base du comportement de regard déterminé,
**caractérisé en ce que** le dispositif de commande (20) est conçu pour :
• régler une valeur de compensation et/ou une valeur limite de compensation d'une régulation automatique de vitesse et/ou d'un limiteur de vitesse du véhicule automobile (10) en fonction du degré de distraction déterminé.

2. Dispositif de commande (20) selon la revendication 1, **caractérisé en ce que** le dispositif de commande (20) est conçu pour déterminer le degré de distraction du conducteur en fonction d'une valeur à court terme, la valeur à court terme indiquant une somme de durées d'états de distraction à court terme dans un premier intervalle de temps préalablement déterminé, dont la durée respective est inférieure à une valeur limite de distraction à court terme préalablement déterminée.

3. Dispositif de commande (20) selon la revendication 1 ou la revendication 2, **caractérisé en ce que** le dispositif de commande est conçu pour déterminer le degré de distraction du conducteur en fonction d'une valeur à long terme, la valeur à long terme indiquant une durée d'un état de distraction à long terme du conducteur, dont la durée est supérieure à une valeur limite de distraction à long terme préalablement déterminée.

4. Dispositif de commande (20) selon la revendication 2 ou 3, **caractérisé en ce que** le dispositif de commande (20) est conçu pour déterminer le degré de distraction du conducteur en fonction d'une fréquence de distraction, la fréquence de distraction indiquant un nombre de valeurs à court terme et/ou de valeurs à long terme dans un deuxième intervalle de temps préalablement déterminé.

5. Dispositif de commande (20) selon l'une des revendications précédentes, **caractérisé en ce que** le dispositif de commande (20) est conçu pour :
• régler la valeur de compensation en fonction du degré de distraction déterminé de sorte que la valeur de compensation soit réduite à partir d'une valeur de compensation actuelle, lorsque le degré de distraction dépasse une première valeur limite supérieure préalablement déterminée, ou
• régler la valeur de compensation en fonction du degré de distraction déterminé de sorte que la valeur de compensation soit réglée à une première valeur préalablement déterminée, lorsque le degré de distraction dépasse la première valeur limite supérieure préalablement déterminée.

6. Dispositif de commande (20) selon l'une des revendications précédentes, **caractérisé en ce que** le dispositif de commande (20) est conçu pour :
• régler la valeur de compensation en fonction du degré de distraction déterminé de sorte que la valeur de compensation soit augmentée à partir d'une valeur de compensation actuelle, lorsque le degré de distraction est inférieur à une première valeur limite inférieure préalablement déterminée, ou
• régler la valeur de compensation en fonction du degré de distraction déterminé de sorte que la valeur de compensation soit réglée à une deuxième valeur préalablement déterminée, lorsque le degré de distraction est inférieur à la première valeur limite inférieure préalablement déterminée.

7. Dispositif de commande (20) selon l'une des revendications précédentes, **caractérisé en ce que** le dispositif de commande (20) est conçu pour :
• régler la valeur limite de compensation en fonction du degré de distraction déterminé de sorte que la valeur limite de compensation soit réduite à partir d'une valeur limite de compensation actuelle, lorsque le degré de distraction dépasse une deuxième valeur limite supérieure préalablement déterminée, ou
• régler la valeur limite de compensation en fonction du degré de distraction déterminé de sorte que la valeur limite de compensation soit réglée à une première valeur préalablement déterminée, lorsque le degré de distraction dépasse la deuxième valeur limite supérieure préalablement déterminée.

8. Dispositif de commande (20) selon l'une des revendications précédentes, **caractérisé en ce que** le dispositif de commande (20) est conçu pour :
• régler la valeur limite de compensation en fonction du degré de distraction déterminé de sorte que la valeur limite de compensation soit augmentée à partir d'une valeur limite de compensation actuelle, lorsque le degré de distraction est inférieur à une deuxième valeur limite inférieure préalablement déterminée, ou
• régler la valeur limite de compensation en fonction du degré de distraction déterminé de sorte que la valeur limite de compensation soit réglée à une deuxième valeur préalablement déterminée, lorsque le degré de distraction est inférieur à la deuxième valeur limite inférieure préalablement déterminée.

9. Véhicule automobile (10), **caractérisé en ce que** le véhicule automobile (10) comprend le dispositif de commande (20) selon l'une des revendications 1 à 8.

10. Procédé pour commander un fonctionnement d'un véhicule automobile (10), le procédé comprenant :
• la réception (S2) de données de capteur concernant un conducteur du véhicule automobile (10),
• la détermination (S3) d'un comportement de regard du conducteur sur la base des données de capteur, et
• la détermination (S4) d'un degré de distraction du conducteur sur la base du comportement de regard déterminé,
**caractérisé en ce que** le procédé comprend :
• le réglage (S7) d'une valeur de compensation et/ou d'une valeur limite de compensation d'une régulation automatique de vitesse et/ou d'un limiteur de vitesse du véhicule automobile (10) en fonction du degré de distraction déterminé.

11. Programme d'ordinateur, **caractérisé en ce que** le programme d'ordinateur comprend des instructions qui, lors de l'exécution du programme par un ordinateur, amènent celui-ci à exécuter le procédé selon la revendication 10.

12. Support lisible par ordinateur, **caractérisé en ce que** le support lisible par ordinateur comprend des instructions qui, lors de l'exécution des instructions par un ordinateur, amènent celui-ci à exécuter le procédé selon la revendication 10.
